# EUROPÄISCHE PATENTSCHRIFT

(11) **EP 1 128 984 B1**
(45) Veröffentlichungstag und Bekanntmachung des Hinweises auf die Patenterteilung: **13.10.2004**
(21) Anmeldenummer: 99955947.9
(22) Anmeldetag: 03.11.1999
(51) Int. Cl.: B60Q 1/26

(54) **FAHRZEUG-RÜCKLEUCHTENEINHEIT MIT EINER STREIFENOPTIK**
MOTOR VEHICLE TAIL LIGHT ASSEMBLY WITH LINEAR OPTICS
BLOC FEUX ARRIERE DE VEHICULE, DOTE D'UNE OPTIQUE A BANDES

(30) Priorität: 12.11.1998 DE 19852310
(43) Veröffentlichungstag der Anmeldung: 05.09.2001
(73) Patentinhaber: Volkswagen Aktiengesellschaft, 38436 Wolfsburg (DE)
(72) Erfinder: WERNER, Michael, D-38106 Braunschweig (DE)
(74) Vertreter: Reitstötter - Kinzebach & Partner (GbR)
(86) Internationale Anmeldenummer: PCT/EP1999/008380
(87) Internationale Veröffentlichungsnummer: WO 2000/029254

(56) Entgegenhaltungen:
- DE-A- 3 503 585
- DE-U- 29 818 264
- US-A- 5 055 983

## Beschreibung

Die Erfindung betrifft eine Rückleuchteneinheit für ein Fahrzeug, insbesondere für ein Personenkraftfahrzeug, die mehrere Reflektoren und diesen zugeordnete Glühlampen für ein Schlußlicht, ein Bremslicht und ein Nebelrücklicht und Reflektoren und Glühlampen für weitere Lichter aufweist.

Derzeitig werden die meisten Fahrzeuge mit Rückleuchteneipheiten ausgerüstet, in denen mehrere Reflektoren und diesen zugeordnete Glühlampen in einer sogenannten Mehrkammerleuchte zusammengefaßt sind, wobei für jedes Signallicht eine separate Kammer mit einem Reflektor ausgebildet ist. Eine derartige Rückleuchteneinheit ist in der EP-A- 0 422 095 beschrieben. Den Reflektoren sind einzelne Abschnitte einer Lichtscheibe zugeordnet, die diese Mehrkammerleuchte abdeckt und die in einer Karosserieöffnung eingesetzt ist und mit dieser bündig abschließt. Den Lichtscheibenabschnitten für das Schlußlicht, das Bremslicht und das Nebelrücklicht ist eine speziell gestaltete Optikscheibe vorgeschaltet, beispielsweise mit aneinandergrenzend verlaufenden Zylinderlinsen, die das von der Glühlampe ausgesendete und weitgehend parallel gerichtet auf diese auftreffende Licht sammeln und zugleich auch für eine ausreichende Streuung sorgen. Die Lichtscheibenabschnitte für das Schlußlicht und das Nebelrücklicht sind überdies mit zeilenförmig angeordneten, optisch wirksamen Rückstrahlertripeln zum Reflektieren von Fremdlicht versehen. Die mit Rückstrahlertripeln versehenen Zeilen wechseln sich mit Zeilen ab, die aneinandergrenzende, vertikal verlaufende Zylinderlinsen aufweisen, um das auf diese treffende, durch den jeweiligen Reflektor parallel gerichtete (Eigen-) Licht in, der Horizontalen zu streuen (Streifenoptik).

Gegenstand der EP 0 549 423 ist eine Abdeckscheibe für eine Signalleuchte, bei der auf der Innenseite wenigstens eines Abdeckscheibenabschnittes pseudo-katadioptrische Elemente mit einem konischen Ende angeordnet sind. Diese Elemente können in länglichen Streifen angeordnet sein und sich mit einer Mehrzahl von länglichen Streifen zur Behandlung eines Lichtbündels, insbesondere zur Streuung des Lichtes abwechseln (Streifenoptik).

In der DE 44 25 401 A1 ist eine Fahrzeugleuchte mit einer Lichtabgabeoptik mit mehreren Funktionsbereichen zur Abgabe verschiedener Lichtsignale beschrieben. In den Funktionsbereichen wird dabei von einer Lichtquelle abgegebenes Licht durch die Lichtabgabeoptik in Licht der vorgeschriebenen Signalfarbe verändert. Zur Verbesserung eines farblich vereinheitlichten Eindruckes der Lichtabgabeoptik bei ausgeschaltetem Zustand der Fahrzeugleuchte ist die transparente Abdeckscheibe insgesamt in einem roten Farbton eingefärbt. Zumindest bestimmte Funktionsbereiche der Abdeckscheibe sind streifenförmig ausgebildet, wobei in Hellrot bzw. Rosa ausgeführte Streifen mit in dunklerem Rot ausgeführten Streifen abwechseln und die in dunklerem Rot ausgeführten Streifen die Form einer lichtablenkenden Prismenoptik, vorzugsweise einer optisch nicht wirksamen Rückstrahleroptik aufweisen und zusätzlich ein Farbfilter im Strahlengang zwischen der Lichtquelle und der Abdeckscheibe angeordnet ist, durch den das von der Lichtquelle kommende Licht durch substraktive Farbmischung die vorgeschriebene abzugebende Signalfarbe erhält.

Des weiteren ist in der EP 0 531 960 A2 eine Mehrkammerleuchte beschrieben, deren Lichtscheibe über allen Kammern eine einheitliche zeilen- oder spaltenförmige Struktur (Streifenoptik) aufweist. Im Bereich der Kammer für das Nebelrücklicht wechseln sich Zeilen mit Rückstrahlertripeln und Zeilen mit optischen Streuelementen ab. Damit die Mehrkammerleuchte in diesem Bereich soviel Licht abgibt, daß die vom Gesetzgeber für die Horizontal- und Vertikalstreuung geforderten Werte erreicht werden, wobei durch die Rückstrahlertripel zumindest im Bereich des Nebelrücklichtes keine Lichtverluste auftreten und die Leuchte auch im ausgeschalteten Zustand für den Betrachter ein in ihrer stilistischen Struktur homogenes Bild bietet, ist der Streifenoptik in diesem Bereich eine Optikscheibe vorgelagert, die im Bereich der Zeilen mit Rückstrahlertripeln zeilenförmig verlaufende Prismen aufweist.

Die vorbeschriebenen Fahrzeug-Rückleuchteneinheiten beanspruchen durch die Vielzahl von anzuordnenden und mit Reflektoren ausgestatteten Kammern und dem geforderten Mindestabstand zwischen dem Bremslicht und dem Nebelrücklicht einen entsprechend großen Anordnungsraum am Fahrzeugheck, was in Abhängigkeit von der Fahrzeuggröße optisch als störend empfunden werden kann.

Es ist Aufgabe der Erfindung, eine Fahrzeug-Rückleuchteneinheit mit einer Streifenoptik nach dem Oberbegriff des Anspruchs 1 zu schaffen, mit der bei der erforderlichen Anzahl von Signallichtern die Gestaltungsmöglichkeiten erweitert und eine Kompaktausbildung mit einem harmonischen Erscheinungsbild ermöglicht sind und bei der bei einem Blick auf die Lichtscheibe deren technische Ausstattung erkennbar ist.

Diese Aufgabe wird bei einer Fahrzeug-Rückleuchteneinheit nach dem Oberbegriff des Anspruchs 1 durch dessen kennzeichnende Merkmale gelöst.

Die Erfindung besteht darin, daß das Schlußlicht der eine Lichtscheibe mit abschnittsweise ausgebildeter Streifenoptik aufweisenden Fahrzeug-Rückleuchteneinheit aus mehreren Reflektoren und Glühlampen gebildet ist, von denen wenigstens zwei Reflektoren Glühlampen mit zwei Leistungsstufen aufweisen, deren höhere Leistungsstufe der Bildung des Brems- und des Nebelrücklichtes dient. Die Streifenoptik wird durch Lichtscheibenabschnitte mit zeilenförmig im Abstand voneinander angeordneten Rückstrahlerelementen gebildet, die im Bereich zwischen dem Reflektor für das Bremslicht und dem Reflektor für das Nebelrücklicht angeordnet sind. Dadurch erschließen sich neue Gestaltungsvarianten bei der erforderlichen Anzahl von Signallichtern, und es wird auch eine Kompaktanordnung der Lichter mit einem harmonischen Erscheinungsbild ermöglicht. Hierdurch wird es ermöglicht der Leuchte im betätigten Zustand ein anderes Erscheinungsbild zu geben als im ausgeschalteten Zustand. Zudem ist bei einem Blick auf die Fahrzeug-Rückleuchteneinheit deren technische Ausstattung durch die Lichtscheibe, auch im Bereich der Streifenoptik erkennbar.

Dabei können die Reflektoren für das Schluß,- das Brems- und das Nebelrücklicht vertikal übereinander angeordnet sein und dabei zwei Reflektorenpaare bilden, von denen die beiden außenliegenden Reflektoren zur Bildung des Bremslichtes und des Nebelrücklichtes vorgesehen sind.

Alternativ dazu können bei dieser Anordnung aber auch alle Reflektoren Glühlampen mit zwei Leistungsstufen aufweisen und zur Bildung des Bremslichtes beitragen, wenn das Nebelrücklicht, das durch einen außenliegenden Reflektor eines der Reflektorenpaare gebildet ist, nicht in Gebrauch ist. Bei Gebrauch desselben wird dann nur der außenliegende Reflektor des anderen Reflektorenpaares zur Bildung des Bremslichtes benutzt, so daß der vorgeschriebene Mindestabstand zwischen Brems- und Nebelrücklicht eingehalten ist. Die Ansteuerung der einzelnen Glühlampen bzw. der einzelnen Leistungsstufen bei Glühlampen mit verschiedenen Leistungsstufen erfolgt über eine elektronische Schaltungsanordnung, die nicht Gegenstand der Erfindung ist.

Für das Bremslicht und das Nebelrücklicht werden als Glühlampen mit zwei Leistungsstufen Zweifadenlampen verwendet. Das bedeutet, daß in dem Falle, in dem alle das Schlußlicht bildenden Reflektoren zugleich für die Bildung des Bremslichtes verwendet werden, alle Reflektoren mit Zweifadenlampen bestückt sind, im anderen Falle nur der jeweils außenliegende der beiden einander zugeordneten Reflektorenpaare.

Die Reflektoren können zur Ausbildung eines neuartigen Designs so gestaltet sein, daß die Lichtaustrittsöffnungen der jeweils zu einem Paar vereinten Reflektoren in der Hauptansicht eine Kreisfläche bilden. Die die Reflektoren trennende Wand erscheint als geradliniger Steg, der außerhalb der Mitte der Kreisfläche ausgebildet sein kann, wobei der das Bremslicht und das Nebelrücklicht bildende Reflektor jeweils größer als der andere paarbildende und innenliegende Reflektor ist. Die trennenden Wände der beiden Reflektorenpaare sind parallel und wenigstens im geforderten Mindestabstand zwischen dem Bremslicht und dem Nebelrücklicht angeordnet. Im ausgeschalteten Zustand hat die Leuchte ein streifenförmiges Design, während bei eingeschalteten Lichtquellen die Form der Reflektoren, hier kreisförmig, das Erscheinungsbild der Leuchte bestimmt.

Diese Anordnung ermöglicht es, den Reflektor für das Rückfahrlicht zwischen den Reflektorpaaren platzsparend anzuordnen und neben diesem fahrzeugaußenseitig den Reflektor für das Blinklicht.

Den einander abgewandten, d.h. außenliegenden Reflektoren für das Bremslicht und das Nebelrücklicht ist jeweils ein rot eingefärbter Lichtscheibenteil zur Abstrahlung roten Signallichtes zugeordnet. Die Streifenoptik ist zur Ausbildung eines harmonischen Erscheinungsbildes vorzugsweise über die gesamte Breite der Rückleuchteneinheit zwischen diesen beiden Reflektoren ausgebildet, wobei den einander zugewandten, d.h. innenliegenden Reflektoren der beiden Reflektorenpaare, dem Reflektor für das Rückfahrlicht und dem Reflektor für das Blinklicht Lichtscheibenabschnitte mit roten Rückstrahlerelementen und zwischen diesen ausgebildeten Lichtscheibenzeilen zugeordnet sind. An den Öffnungen der hinter der Streifenoptik befindlichen Reflektoren sind im Abstand von den Lichtscheibenabschnitten jeweils eine Optikscheibe mit horizontal und im wesentlichen quer zur Fahrzeuglängsrichtung ausgerichteten Zylinderlinsen zur Bündelung des abgestrahlten Lichtes angeordnet. Die Lichtscheibenzeilen sind weiß, rauchglasartig oder rosa eingefärbt, und die Optikscheibe ist zur Erzeugung weißen Lichtes (gegebenenfalls Rückfahrscheinwerfer) gelben oder roten Signallichtes (Blinklicht, Schlußlicht, gegebenenfalls Bremslicht) als entsprechender Farbfilter ausgebildet oder der Optikscheibe sind entsprechende Farbfilter zugeordnet.

Die Erfindung wird nachstehend anhand eines Ausführungsbeispiels erläutert. In der zugehörigen Zeichnung zeigen schematisch:
- Fig. 1:: eine Hauptansicht der Fahrzeug-Rückleuchteneinheit,
- Fig. 2:: einen Vertikalschnitt II-II durch diese und
- Fig. 3a bis 3d:: die Anordnung des Schluß-, Brems- und Nebelrücklichtes in der Rückleuchteneinheit nach Fig. 1 mit verschiedenen Betriebszuständen.

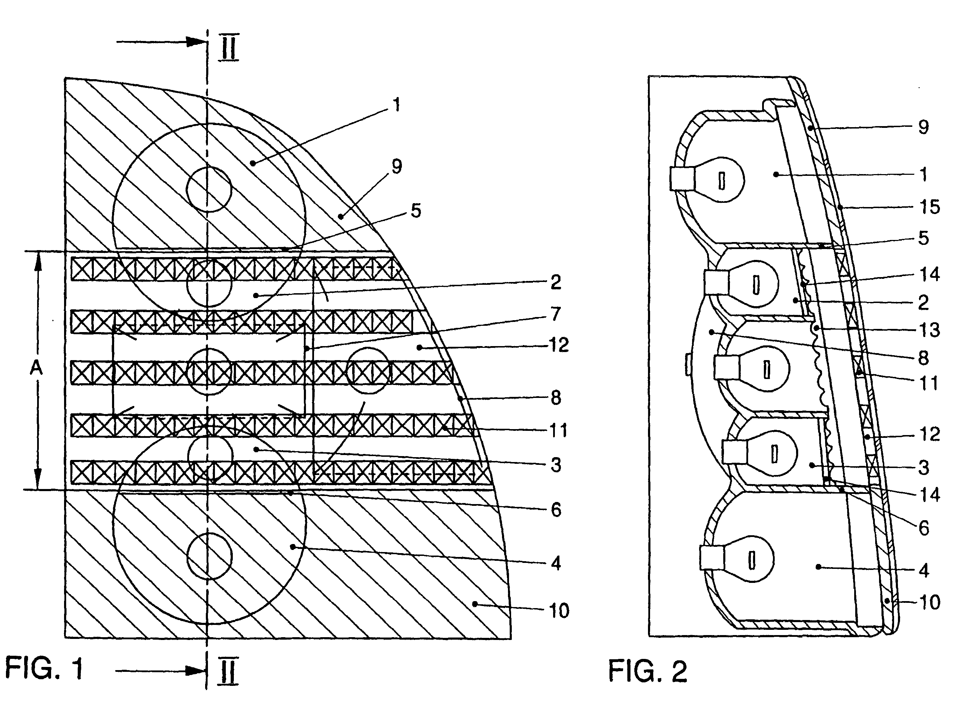

In den Fig. 1 und 2 ist eine Rückleuchteneinheit für einen Personenkraftwagen in der Hauptansicht, wie sie sich am Fahrzeugheck ergibt, und in einem Vertikalschnitt dargestellt. Die Rückleuchteneinheit weist vier Reflektoren 1 bis 4 zur Bildung des Schlußlichtes auf, von denen die Reflektoren 1 und 2 und die Reflektoren 3 und 4 jeweils zu einem Paar zusammengefaßt und vertikal übereinander angeordnet sind. Jedes Reflektorenpaar bildet eine Kreisfläche, in der die Reflektoren 1 und 2 bzw. 3 und 4 infolge ihrer unterschiedlichen Größe außermittig durch eine als Steg erscheinende Trennwand 5 bzw. 6 voneinander getrennt sind. Die beiden außenliegenden Reflektoren 1 und 4 werden zur Bildung des Bremslichtes und des Nebelrücklichtes genutzt. Die Trennwände 5 und 6 sind im gesetzlich geforderten Mindestabstand (A) für das Bremslicht und das Nebelrücklicht von 100,2 mm (in DE) angeordnet. Zwischen den Reflektorenpaaren ist ein Reflektor 7 für den Rückfahrscheinwerfer und neben diesem und fahrzeugaußenseitig ein Reflektor 8 für das Blinklicht angeordnet.

Die Reflektoren 1 und 4 sind von einem jeweils rot eingefärbten Lichtscheibenteil 9 und 10 abgedeckt. Zwischen dem Reflektor 1 für das Bremslicht und dem Reflektor 4 für das Nebelrücklicht ist über den Reflektoren 2 und 3 zur Bildung des Schlußlichtes sowie dem Reflektor 7 für den Rückfahrscheinwerfer und den Reflektor 8 für das Blinklicht die Lichtscheibe als Streifenoptik ausgebildet, in der sich zeilenförmig angeordnete rote Rückstrahlertripel 11 und Lichtscheibenzeilen 12 abwechseln.

Fig. 2 zeigt die Anordnung der Lichtscheibe im Schnitt. Zwischen den Lichtscheibenteilen 9 und 10 ist die Streifenoptik mit den zeilenförmig angeordneten roten Rückstrahlertripeln 11 und weißen Lichtscheibenzeilen 12 zu erkennen. Vor den Reflektoröffnungen ist, gegenüber den Lichtscheibenabschnitten mit der Streifenoptik um 8 mm zurückversetzt, eine weiße Optikscheibe 13 mit einer Walzenoptik angeordnet, gebildet aus horizontal und quer zur Fahrzeuglängsachse ausgerichteten Zylinderlinsen zur Bündelung des durch die Reflektoren abgestrahlten Lichtes. Der Optikscheibe 13 ist an den Öffnungen der Reflektoren 2 und 3 für das Schlußlicht jeweils ein Farbfilter 14 zur Erzeugung roten Lichtes zugeordnet. Die Lichtscheibenteile 9 und 10 und die zwischen diesen angeordnete Streifenoptik sind außen mit einer skin-molding-Schicht 15 überdeckt.

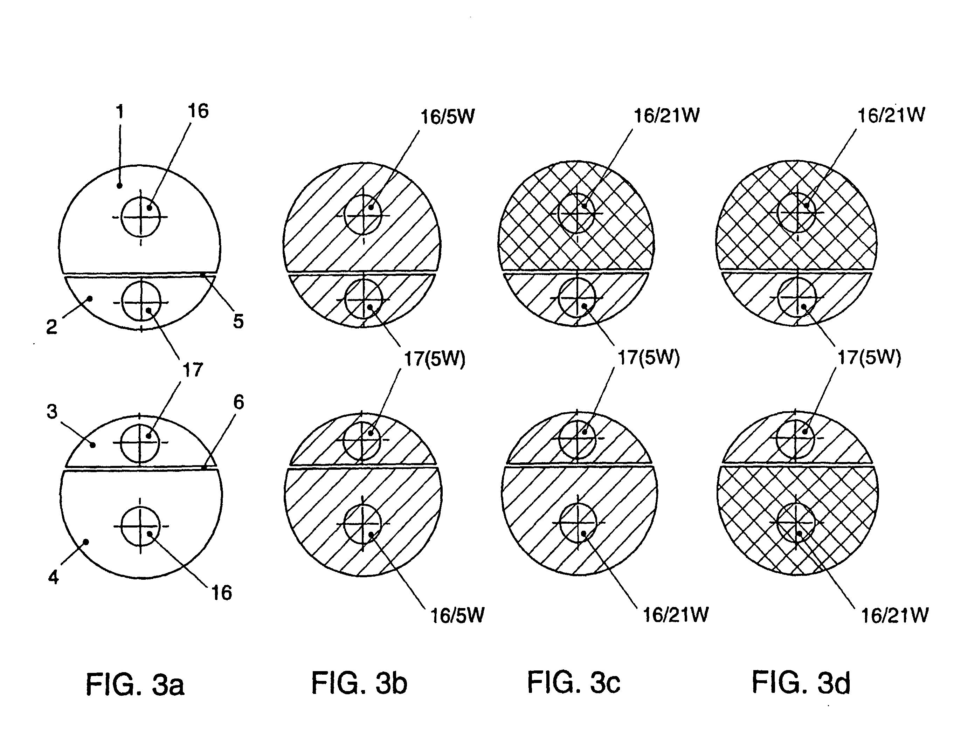

In den Fig. 3a bis 3d ist die Anordnung der beiden Reflektorenpaare zur Bildung des Schluß,- Brems- und Nebelrücklichtes mit verschiedenen Betriebszuständen dargestellt. Die Reflektoren 1 und 4 sind jeweils mit einer Zweifadenlampe 16 mit den Leistungen 5 W und 21 W und die Reflektoren 2 und 3 jeweils mit einer Einfadenlampe 17 mit der Leistung von 5 W bestückt. Fig. 3a zeigt die Glühlampen im ausgeschalteten Zustand. In Fig. 3b sind die Einfadentampen 17 und die Zweifadenlampen 16 mit der niedrigen Leistungsstufe von 5 W zur Bildung des Schlußlichtes angeschaltet. Jedes Reflektorenpaar erscheint als einheitliche kreisrunde Rückleuchte, wobei das von den Reflektoren 2 und 3 abgestrahlte Licht zwischen den streifenförmigen Rückstrahlertripeln 11 als Streulicht durch die Lichtscheibenzeilen 12 tritt. Die Trennwände 5 und 6 sind nicht mehr zu erkennen. In Fig. 3c ist, ausgelöst durch eine Bremspedalbetätigung, das Bremslicht zugeschaltet, in dem die Zweifadenlampe 16 im Reflektor 1 auf ihre höhere Leistungsstufe umgeschaltet ist. Das Bremslicht strahlt wesentlich intensiver als das Schlußlicht und hebt sich deutlich von diesem ab. Fig. 3d zeigt den Betriebszustand, bei dem das Nebelrücklicht eingeschaltet ist, wozu die Zweifadenlampe 16 im Reflektor 4 mit ihrer höheren Leistungsstufe betrieben wird. Das Nebelrücklicht strahlt ebenso intensiv wie das Bremslicht, ist aber von diesem durch den eingehaltenen Abstand (A) zu diesem deutlich zu unterscheiden, zumal das Bremslicht nur zeitweilig aufleuchtet.

### BEZUGSZEICHENLISTE

- 1: Reflektor
- 2: Reflektor
- 3: Reflektor
- 4: Reflektor
- 5: Trennwand
- 6: Trennwand
- 7: Reflektor
- 8: Reflektor
- 9: Lichtscheibenteil
- 10: Lichtscheibenteil
- 11: Rückstrahlertripel
- 12: Lichtscheibenzeile
- 13: Optikscheibe
- 14: Farbfilter
- 15: skin-molding-Schicht
- 16: Zweifadenlampe
- 17: Einfadenlampe

## Patentansprüche

1. Fahrzeug-Rückleuchteneinheit mit einer Streifenoptik, mit mehreren Reflektoren (1 bis 4) und diesen zugeordneten Glühlampen (16; 17) zur Bildung eines Schlußlichtes, eines Bremslichtes und eines Nebelrücklichtes und mit Reflektoren und Glühlampen für ein Blinklicht und einen Rückfahrscheinwerfer sowie mit Licht- und Optikscheiben (9, 10) wobei einzelne Lichtscheibenabschnitte zur Ausbildung der Streifenoptik zeilenförmig im Abstand angeordnete Rückstrahlerelemente (11,12) aufweisen, und mit einer skin-molding-Schicht, wobei das Schlußlicht aus mehreren Reflektoren (1 bis 4) und Glühlampen (16; 17) gebildet ist **dadurch gekennzeichnet, daß** bei dem Schlußlicht wenigstens zwei Reflektoren (1, 4) Glühlampen (16) mit zwei Leistungsstufen aufweisen, wobei ein Reflektor (1) mit der auf die höhere Leistungsstufe geschalteten Glühbirne (16) der Bildung des Brems- und der andere (4) des Nebelrücklichtes dient und diese Reflektoren (1, 4) in einem Abstand zueinander angeordnet sind, und daß die Lichtscheibenabschnitte mit den Rückstrahlerelementen (11) im Bereich zwischen dem Reflektor (1) für das Bremslicht und dem Reflektor (4) für das Nebelrücklicht angeordnet sind.

2. Rückleuchteneinheit nach Anspruch 1, **dadurch gekennzeichnet, daß** die Reflektoren (1 bis 4) bei Bildung zweier Reflektorenpaare (1/2 und 3/4) vertikal übereinander angeordnet sind und die beiden außenliegenden Reflektoren (1, 4) der Bildung des Bremslichtes und des Nebelrücklichtes dienen.

3. Rückleuchteneinheit nach Anspruch 1, **dadurch gekennzeichnet, daß** die Reflektoren (1 bis 4) bei Bildung zweier Reflektorenpaare (1/2 und 3/4) vertikal übereinander angeordnet sind und alle Reflektoren (1 - 4) Glühlampen (16) mit zwei Leistungsstufen aufweisen, und daß bei Nichtgebrauch des Nebelrücklichtes alle Reflektoren (1- 4) das Bremslicht bilden und bei Gebrauch des Nebelrücklichtes nur der zu diesem im geforderten Mindestabstand (A) angeordnete Reflektor (1 ).

4. Rückleuchteneinheit nach Anspruch 1, 2 oder 3, **dadurch gekennzeichnet, daß** die Austrittsöffnungen der jeweils zu einem Paar vereinten Reflektoren (1/2 und 3/4) in der Hauptansicht zusammen eine Kreisfläche bilden und die jeweils in den beiden Austrittsöffnungen gegebene Trennwand (5, 6) als geradliniger Steg erscheint, und daß die Stege parallel und im geforderten Mindestabstand (A) zwischen dem Bremslicht und dem Nebelrücklicht zueinander angeordnet sind.

5. Rückleuchteneinheit nach Anspruch 4, **dadurch gekennzeichnet, daß** im Bereich zwischen den vertikal übereinander angeordneten Reflektorenpaaren (1/2 und 3/4) der Reflektor (7) für den Rückfahrscheinwerfer und jeweils fahrzeugaußenseitig neben diesem der Reflektor (8) für das Blinklicht angeordnet sind.

6. Rückleuchteneinheit nach einem der vorhergehenden Ansprüche, **dadurch gekennzeichnet, daß** den einander zugewandten Reflektoren (2, 3), dem Reflektor (7) für den Rückfahrscheinwerfer und dem Reflektor (8) für das Blinklicht Lichtscheibenabschnitte mit streifenförmig angeordneten roten Rückstrahlerelementen (11) und zwischen diesen ausgebildeten Lichtscheibenzeilen (12) und an den Reflektoröffnungen und im Abstand von diesen Lichtscheibenabschnitten jeweils eine Optikscheibe (13) mit horizontal ausgerichteten Zylinderlinsen zur Bündelung des abgestrahlten Lichtes und den einander abgewandten Reflektoren (1, 4) jeweils ein rot eingefärbter Lichtscheibenteil (9, 10) zugeordnet ist, wobei die Lichtscheibenzeilen (12) im Bereich der Reflektoren (2, 3, 7, 8) weiß, rauchglasartig oder rosa eingefärbt sind, und daß für die Bereiche dieser Reflektoren die Optikscheibe (13) zur Erzeugung weißen, gelben oder roten Signallichtes zugleich als Farbfilter ausgebildet oder dieser ein Farbfilter (14) zugeordnet ist.

7. Rückleuchteneinheit nach Anspruch 1 oder 3, **dadurch gekennzeichnet, daß** die Betriebszustände der Glühlampen (16) - Nulleistung niedrige Leistung höhere Leistung - und der Glühlampen (17) - Nulleistung niedrige Leistung - durch eine elektronische Schaltung gesteuert werden.

## Claims

1. Vehicle tail light assembly with linear optics, having a plurality of reflectors (1 to 4) and incandescent lamps (16; 17) which are assigned thereto in order to form a tailgate light, a brake light and a rear fog light and having reflectors and incandescent lights for a direction indicator light and a reversing light as well as having lenses and optical lenses (4), individual sections of the lens having a rear reflector (11, 12) which is arranged at a distance in rows in order to form the linear optics, and having a skin moulding layer, the tailgate being formed from a plurality of reflectors (1 to 4) and incandescent lights (16; 17), **characterized in that** in the case of the tail light at least two reflectors (1, 4) have incandescent lights (16) with two power levels, one reflector (1) serving, with the incandescent bulb (16) which is connected to the higher power level, to form the brake light, and the other (4) to form the rear fog light, and these reflectors (1, 4) being arranged at a distance from one another, and **in that** the sections of a lens being arranged, with the rear reflector elements (11), in the region between the reflector (1) for the brake light and the reflector (4) for the rear fog light.

2. Tail light assembly according to Claim 1, **characterized in that** the reflectors (1 to 4) are arranged vertically one on top of the other when two reflector pairs (1/2 and 3/4) are formed, and the two reflectors (1, 4) which lie on the outside serve to form the brake light and the rear fog light.

3. Tail light assembly according to Claim 1, **characterized in that**, when two reflector pairs (1/2 and 3/4) are formed, the reflectors (1 to 4) are arranged vertically one on top of the other, and all the reflectors (1 - 4) have incandescent lights (16) with two power levels, and **in that** when the rear fog light is not in use all the reflectors (1 - 4) form the brake light, and when the rear fog light is in use only the reflector (1) which is arranged at the required minimum distance (A) therefrom forms the brake light.

4. Tail light assembly according to Claim 1, 2 or 3, **characterized in that** the exit openings of the reflectors (1/2 and 3/4), which are respectively combined into a pair, together form a circular surface in the main view, and the dividing wall (5, 6) which is formed in the two exit openings appears as linear web, and **in that** the webs are arranged in parallel and at the required minimum distance (A) from one another between the brake light and the rear fog light.

5. Tail light assembly according to Claim 4, **characterized in that** the reflector (7) for the reversing light is arranged in the region between the reflector pairs (1/2 and 3/4) which are arranged vertically one on top of the other, and in each case the reflector (8) for the indicator light is arranged next to said reflector (7) on the outer side of the vehicle.

6. Tail light assembly according to one of the preceding claims, **characterized in that** sections of a lens with red reflector elements (11) which are arranged in strips are assigned to the reflectors (2, 3) facing one another, the reflector (7) for the reversing light and the reflector (8) for the direction indicator light, and in each case an optical lens (13) with horizontally aligned cylinder lenses for focusing the emitted light is assigned between these rows of lenses (12) which are formed and at the reflector openings and at a distance from these sections of a lens, and in each case a red-coloured lens part (9, 10) is assigned to the reflectors (1, 4) facing away from one another, the rows of lenses (12) being coloured white, in the manner of smoked glass or pink in the region of the reflectors (2, 3, 7, 8), and **in that** the optical lens (13) is at the same time embodied as a colour filter for the regions of these reflectors in order to generate white, yellow or red signalling light, or a colour filter (14) is assigned to said optical lens (13).

7. Tail light assembly according to Claim 1 or 3, **characterized in that** the operating states of the incandescent lights (16) - zero power, low power, relatively high power - and of the incandescent lights (17) - zero power, low power - are controlled by means of an electronic circuit.

## Revendications

1. Bloc optique arrière comprenant une optique à bandes, plusieurs réflecteurs (1 à 4) et des ampoules (16 ; 17) attribuées à ces réflecteurs pour former un feu arrière, un feu stop et un feu de brouillard arrière et comprenant des réflecteurs et des ampoules pour un clignotant et un phare de recul ainsi que des disques lumineux et des disques d'optique, des parties individuelles de disques lumineux présentant des éléments réflecteurs (11, 12) disposés en ligne et à distance pour former l'optique à bandes, et comprenant une couche de skin-molding, le feu arrière étant formé de plusieurs réflecteurs (1 à 4) et ampoules (16 ; 17), au moins deux réflecteurs (1, 4) présentant des ampoules (16) avec deux niveaux de puissance, un réflecteur (1) avec l'ampoule (16) commutée sur le niveau de puissance supérieur servant à former le feu stop et l'autre (4) le feu de brouillard arrière et ces réflecteurs (1, 4) étant disposés à distance les uns des autres, et en ce que les parties de disques lumineux sont disposées avec les éléments réflecteurs (11) dans la zone située entre le réflecteur (1) pour le feu stop et le réflecteur (4) pour le feu de brouillard arrière.

2. Bloc optique arrière selon la revendication 1, **caractérisé en ce que** les réflecteurs (1 à 4) sont disposés les uns au-dessus des autres verticalement pour former deux paires de réflecteurs (1/2 et 3/4) et les deux réflecteurs (1, 4) extérieurs servent à former le feu stop et le feu de brouillard arrière.

3. Bloc optique arrière selon la revendication 1, **caractérisé en ce que** les réflecteurs (1 à 4) sont disposés les uns au-dessus des autres verticalement pour former deux paires de réflecteurs (1/2 et 3/4) et tous les réflecteurs (1-4) présentent des ampoules (16) avec deux niveaux de puissance, et **en ce que** tous les réflecteurs (1-4) forment le feu stop si le feu de brouillard arrière n'est pas utilisé et seulement le réflecteur (1) disposé à la distance minimale (A) exigée par rapport à ce feu si le feu de brouillard arrière est utilisé.

4. Bloc optique arrière selon la revendication 1, 2 ou 3, **caractérisé en ce que** les ouvertures de sortie des réflecteurs (1/2 et 3/4) réunis respectivement pour former une paire forment ensemble une surface circulaire en vue principale et la cloison de séparation (5, 6) présente respectivement dans les deux ouvertures de sortie apparaît comme une nervure rectiligne et **en ce que** les nervures sont disposées parallèlement et à la distance minimale (A) exigée entre le feu stop et le feu de brouillard arrière les unes par rapport aux autres.

5. Bloc optique arrière selon la revendication 4, **caractérisé en ce que** le réflecteur (7) pour le phase de recul est disposé dans la zone entre les paires de réflecteurs (1/2 et 3/4) disposées les unes au-dessus des autres verticalement et le réflecteur (8) pour le clignotant est disposé côté extérieur du véhicule à côté de ce celui-ci.

6. Bloc optique arrière selon l'une quelconque des revendications précédentes, **caractérisé en ce que** aux réflecteurs (2, 3) tournés les uns vers les autres, au réflecteur (7) pour le phare de recul et au réflecteur (8) pour le clignotant sont attribuées des parties de disques lumineux avec des éléments réflecteurs (11) rouges, disposés en forme de bandes, et des rangées de disques lumineux (12) formées entre ces éléments et sur chacune des ouvertures de réflecteur et à distance de ces parties de disques lumineux est disposé un disque d'optique (13) avec des lentilles cylindriques orientées horizontalement pour la concentration de la lumière émise et à chacun des réflecteurs (1, 4) opposés les uns aux autres, est attribuée une partie de disque lumineux (9, 10) teintée en rouge, les rangées de disques lumineux (12) étant teintées en blanc, vert fumé ou rose dans la zone des réflecteurs (2, 3, 7, 8), et **en ce que**, pour les zones de ces réflecteurs, le disque d'optique (13) est conçu en même temps comme filtre de couleur pour générer une lumière de signal blanche, jaune ou rouge ou bien un filtre de couleur (14) est attribué à ce disque.

7. Bloc optique arrière selon la revendication 1 ou 3, **caractérisé en ce que** les états de service des ampoules (16) - puissance zéro faible puissance puissance supérieure - et des ampoules (17) - puissance zéro faible puissance - sont commandés par un circuit électronique.
